# EUROPÄISCHE PATENTSCHRIFT

(11) **EP 0 381 784 B1**
(45) Veröffentlichungstag und Bekanntmachung des Hinweises auf die Patenterteilung: **20.10.1993**
(21) Anmeldenummer: 89102004.2
(22) Anmeldetag: 06.02.1989
(51) Int. Cl.: G05B 19/23

(54) **Elektrohydraulisches Antriebssystem**
Electro-hydraulic drive system
Système d'entraînement électrohydralique

(43) Veröffentlichungstag der Anmeldung: 16.08.1990
(73) Patentinhaber: Vickers Systems GmbH, D-61294 Bad Homburg (DE)
(72) Erfinder: Walter, Ulrich, D-6236 Eschborn 2 (DE)
(74) Vertreter: Gleiss, Alf-Olav, Dr.jur. Dipl.-Ing.

(56) Entgegenhaltungen:
- EP-A- 0 046 180
- DE-A- 3 441 240
- US-A- 4 130 786
- US-A- 4 590 764

## Beschreibung

Die Erfindung bezieht sich auf ein elektrohydraulisches Antriebssystem, das ein Steuerventil, einen von diesem gesteuerter hydraulischer Betätiger, eine von diesem angetriebene Last mit Positionssensor, einen Vergleicher zum Vergleich des Ist-Positionssignals mit einem Soll-Positionssignal und Bildung eines Stellgrößensignals, ferner unterlagerte Regelkreise aufgrund von Geschwindigkeit und Beschleunigung und einen Ventilverstärker aufweist, der das Steuerventil antreibt und damit den Regelkreis schließt.

Bei derartigen bekannten elektrohydraulischen Antriebssystemen wurden die Hilfsregelgrößen Geschwindigkeit und Beschleunigung mit entsprechenden Sensoren erfaßt. Sensoren sind jedoch teuer und können bei vielen Anwendungen aus räumlichen oder technischen Gründen unerwünscht sein. Deshalb werden auch sogenannte Zustandsbeobachter verwendet, die einen elektronischen Simulator der Regelstrecke darstellen und die erwünschten Größen errechnen. Nachteilig bei so aufgebauten elektrohydraulischen Antriebssystemen ist die Kompliziertheit der Reglereinstellung, welche einen sehr gut ausgebildeten Spezialisten voraussetzt und zeitaufwendig ist. Dies läuft den Bedürfnissen der Praxis zuwider.

Der Erfindung liegt die Aufgabe zugrunde, ein elektrohydraulisches Antriebssystem zu schaffen, welches Standard NC/CNC-Steuerungen mit inkrementalen Meßsystemen und SPS-Achsrechnern beinhalten kann, eine große Positioniergenauigkeit erreicht und mit hoher Dynamik arbeitet.

Die gestellte Aufgabe wird aufgrund der Merkmale des Hauptanspruches gelöst. Dabei werden die Hilfsregelgrößen Geschwindigkeit und Beschleunigung direkt aus dem inkrementalen Wegesignal errechnet und nicht lediglich simuliert. Da die Weggeberimpulse eine relativ hohe Eingangsfrequenz aufweisen können, kann eine sehr hohe Meßwiederholrate erzielt werden. Die Genauigkeit der Meßwerterfassung läuft auf die Genauigkeit der Messung von Zeitspannen hinaus, und derartige Messungen können sehr genau durchgeführt werden. Damit erfolgt die Bestimmung der Geschwindigkeit mit hoher Auflösung und Genauigkeit. Deswegen ist es möglich, mittels eines analogen Differenzierers die Beschleunigung aus der Geschwindigkeit zu errechnen. Damit ergibt sich insgesamt ein mäßiger Aufwand für das verbesserte elektrohydraulische Antriebssystem gemäß Erfindung.

Kern der Erfindung ist die Meßwertberechnungsschaltung, welche eine Steuerlogikschaltung, einen Oszillator, einen Zähler mit Zwischenspeicher, eine Umkehrfunktionsschaltung, einen Digital-Analogwandler und einen Differenzierer enthält. Die Steuerlogikschaltung steckt die Fahrzeit für eine inkrementale Wegstrecke aufgrund zweier um 90° versetzter Impulsreihen ab und bildet außerdem ein Vorzeichen für die Bewegungsrichtung des hydraulischen Betätigers. Die Fahrzeit wird mit Impulsen ausgemessen, die von dem Oszillator geliefert werden und in einen Zähler einlaufen. Der Zählerstand wird vom Zähler auf einen Zwischenspeicher übertragen, so daß der Zähler für eine neue Messung vorbereitet ist. Die Umkehrfunktionsschaltung bildet den Kehrwert zum jeweiligen Zählerstand des Zwischenspeichers und damit einen digitalen, geschwindigkeitsproportionalen Zahlenwert, der beispielsweise 15 Bit Positionen umfassen kann, zu dem noch das richtige Vorzeichen als 16. Bitposition hinzutritt. Der geschwindigkeitsproportionale Zahlenwert wird in ein analoges Geschwindigkeitssignal umgewandelt, welches dem unterlagerten Regelkreis zugeführt wird, um das Stellgrößensignal in geeigneter Weise zu korrigieren. Das Geschwindigkeitssignal kann durch Tiefpaßfilter geglättet werden, und aus dem geglätteten Signal kann das Beschleunigungssignal durch entsprechende zeitliche Ableitung gewonnen werden. Auch das Beschleunigungssignal dient als Hilfsregelgröße zur Verbesserung der Dynamik des elektrohydraulischen Antriebssystems.

Die Erfindung wird anhand der Zeichnung besprochen. Dabei zeigt:
- Fig. 1: ein Blockschaltbild des elektrohydraulischen Antriebssystems,
- Fig. 2: das Blockschaltbild einer ersten Meßwertberechnungsschaltung,
- Fig. 3: das Blockschaltbild einer zweiten Meßwertberechnungsschaltung,
- Fig. 4: ein erstes Impulsdiagramm für eine erste Bewegungsrichtung und
- Fig. 5: ein zweites Impulsdiagramm für eine zweite Bewegungsrichtung.

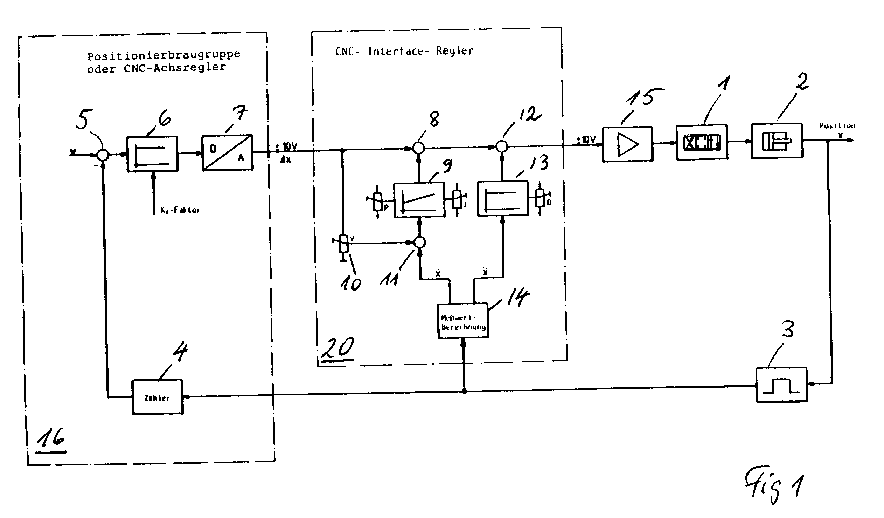

Das in Fig. 1 dargestellte elektrohydraulische Antriebssystem umfaßt ein Steuerventil 1, einen hydraulischen Betätiger 2 zum Antrieb einer nicht dargestellten Last, einen inkrementalen Impulsgeber 3, einen Wegzähler 4, einen ersten Vergleicher 5, einen Lageregler 6, einen Digital-Analogwandler 7, einen zweiten Vergleicher 8, einen Regler 9 mit Einstellpotentiometer P und I für P-Verstärkung und Nachstellzeit, eine Regelschleife 10 unter Einschluß eines Vergleichers 11 und eines Potentiometers v für den Abgleich zwischen Sollgeschwindigkeit und Istgeschwindigkeit, einen weiteren Vergleicher 12, einen Regler 13 mit Einstellpotentiometer D für Beschleunigungsaufschaltung, eine Meßwertberechnungsschaltung 14 und einen Ventilverstärker 15. Je nach der Stellung des Steuerventils 1 fährt der hydraulische Betätiger 2 mit größerer oder kleinerer Geschwindigkeit nach vorwärts oder rückwärts oder steht still, wobei die Last entsprechend bewegt wird. Der inkrementale Impulsgeber 3 ist entweder mit dem hydraulischen Betätiger 2 oder der Last verbunden und gibt beim Lauf des Betätigers entsprechend zurückgelegten, sehr kleinen (inkrementalen) Wegstrecken Impulse ab, deren Frequenz von der Fahrtgeschwindigkeit abhängt. Es kann Vorsorge dafür getroffen werden, daß bei der größten auftretenden Fahrgeschwindigkeit des Betätigers 2 eine Impulsfrequenz von 10 oder 20 oder 40 oder 80 kHz auftritt. Der Impulsgeber 3 ist zur Abgabe zweier um 90° gegeneinander versetzter Impulsreihen ausgebildet, die beispielsweise für 5 V und 24 V ausgelegt sind. Der Wegzähler 4 zählt die ihm zugeführten Impulse unter Berücksichtigung der Fahrtrichtung des Betätigers und damit die zurückgelegten inkrementalen Wegstrecken, woraus ein Ist-Positionssignal gebildet wird, welches dem negativen Eingang des ersten Vergleichers 5 zugeführt wird, an dessen anderem Eingang ein Soll-Positionssignal w anliegt und der daraus sowie unter Mithilfe des Lagereglers 6 ein digitales Stellgrößensignal bildet. Die Verstärkung des Lagereglers 6, der sogenannte Kv-Faktor, ist einstellbar und damit auch die Kreisverstärkung des Systems. Je höher die Kreisverstärkung, umso rascher folgt das System der Fürhungsgröße W, jedoch steigt ebenfalls die Schwingungsempfindlichkeit. Das digitale Stellgrößensignal wird von dem Digital-Analogwandler 7 in ein erstes analoges Stellgrößensignal (eine Spannung zwischen +/- 10 V) umgewandelt. Dieses Stellgrößensignal kann dem Ventilverstärker 15 direkt über DIL-Schalter zur Inbetriebnahme zugeführt werden, in welchem der Steuerstrom zur Betätigung des Steuerventils 1 gebildet wird. Die Teile 4, 5, 6 und 7 werden zweckmäßig auf einer Beschaltungskarte untergebracht und diese als Positionierbaugruppe 16 oder CNC-Achsregler bezeichnet.

Um hohe Anforderungen an die Positioniergenauigkeit und die Dynamik erfüllen zu können, reicht die einschleifige Positionierbaugruppe 16 nicht aus. Die Bauteile 8 bis 14 bilden unterlagerte Hilfsregelkreise und werden als CNC-Interface-Regler 20 bezeichnet.Auch dieser hat auf einer Beschaltungskarte Platz. Der CNC-Interface-Regler 20 berechnet aus den Impulsen des Impulsgebers 3 die Hilfsgrößen Geschwindigkeit und Beschleunigung und korrigiert damit das Stellgrößensignal. Der CNC-Interface-Regler 20 ist seiner Struktur nach ein unterlagerter Geschwindigkeitsregelkreis mit Beschleunigungsrückführung. Wie dargestellt, werden die Regelparameter über Potentiometer eingestellt, wobei an dem Potentiometer v der Abgleich zwischen Soll- und Ist-Geschwindigkeit zur Anpassung an den berechneten Geschwindigkeitswert erfolgt und im Potentiometer p die p-Verstärkung, im Potentiometer I die Nachstellzeit und im Potentiometer D das Maß der Beschleunigungsaufschaltung eingegeben werden.

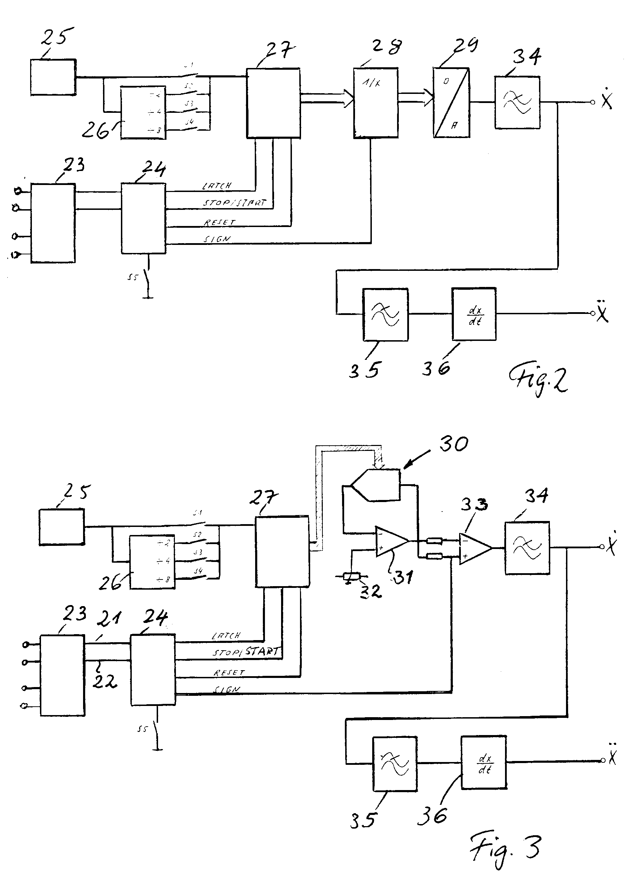

Kernstück des CNC-Interface-Reglers 20 ist die Meßwertberechnungsschaltung 14, von der zwei Ausführungsbeispiele in den Fig. 2 und 3 dargestellt sind. Soweit funktionsgleiche Teile verwendet werden, werden auch die gleichen Bezugszeichen benutzt.

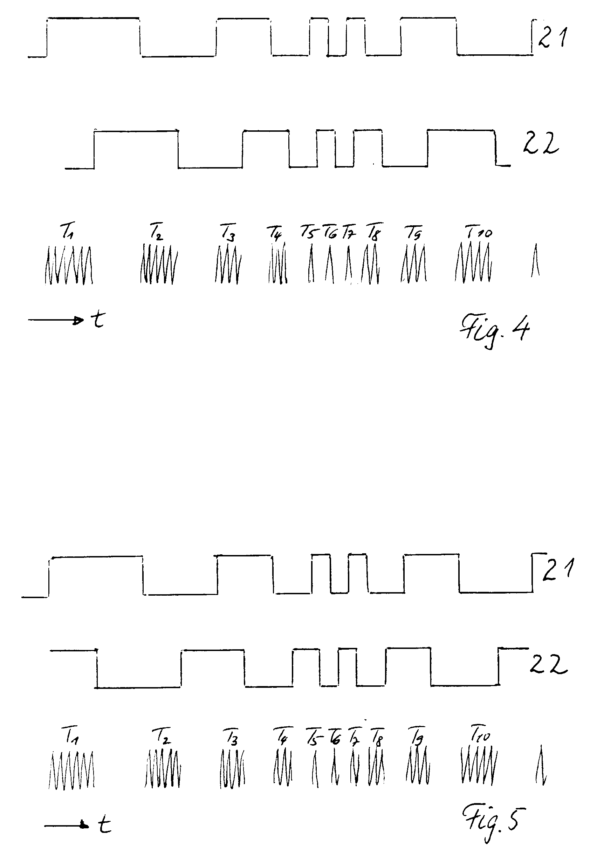

Die von dem inkrementalen Impulsgeber 3 auf Doppelleitungen ausgehenden und gegeneinander versetzten Impulsreihen werden in einer Impulsformerstufe 23 mittels Schmittrigger für die Meßwertberechnungsschaltung 14 aufbereitet und an den 5 V-TTL-Pegel angepaßt. Die beiden so erhaltenen Weggeberspuren 21, 22 (Fig. 4 und 5) werden einer Steuerlogikschaltung 24 zugeführt, welche daraus ein Start-Signal, ein Stopp-Signal, ein Latch-Signal, ein Reset-Signal und ein Sign-Signal bildet. Zwischen jedem Start- und Stopp-Signal wird jeweils eine Zeit abgesteckt, die proportional zur Fahrzeit für je eine inkrementale Wegstrecke ist und hier als die halbe Fahrzeit für den einen Impuls betreffenden Weg ausgewählt ist. Zur Verdeutlichung dieses Sachverhaltes wird auf Fig. 4 und 5 Bezug genommen. Die beiden Weggeberspuren 21 und 22 sind dort als um 90° gegeneinander versetzte Impulsreihen dargestellt, wobei die Impulsreihe 22 in Fig. 4 nacheilt und in Fig. 5 voreilt. Wenn diese Impulsreihen in der Steuerlogikschaltung 24 gemäß der Zeitachse t abgetastet werden, indem bei jeder Flanke der ersten und der zweiten Weggeberspur 21, 22 eine Umschaltung zwischen logischem High und logischem Low erfolgt, werden Zeitabschnitte T1 bis T10 erhalten, die jeweils halb so lang wie die zugehörigen Impulslängen der Weggeberspuren 21 oder 22 sind. Es besteht somit eine feste Beziehung zwischen der Größe von T1 bis T10 und der zugehörigen Fahrzeit für eine zugehörige zurückgelegte Wegstrecke. Je höher die Fahrtgeschwindigkeit, umso kleiner die Fahrzeit für eine inkrementale Wegstrecke. Die Diagramme der Fig. 4 und 5 geben einen Anfahrvorgang mit Beschleunigung und Abbremsung schematisch wieder. (In Wirklichkeit ist die Änderungsgeschwindigkeit der Impulslängen wesentlich kleiner.)

Wenn die Weggeberspuren 21 und 22 entsprechend der Zeitachse t von rechts nach links abgetastet werden, so werden im Falle der Fig. 4 jeweils gleichgerichtete Flanken zwischen den Spuren 21 und 22 angetroffen, während im Falle der Fig. 5 die Flanken der Impulsreihen entgegengerichtet sind, also auf eine aufsteigende Flanke der Spur 21 eine abfallende Flanke der Spur 22 bzw. auf eine abfallende Flanke der Spur 21 eine aufsteigende Flanke der Spur 22 folgen. Gleichbleibende Flankenrichtung bzw. wechselnde Flankenrichtung kann zur Bestimmung der Bewegungsrichtung und damit zur Bildung des Sign-Signals ausgenutzt werden. Hierzu dient ein dynamisches Flip-Flop in der Steuerlogikschaltung 24, das an die Weggeberspuren 21, 22 eingangsseitig angeschlossen ist und dessen Ausgang das Sign-Signal darstellt. Mit dem Schalter 55 kann die Polarität der Weggeberspuren richtig eingestellt werden.

Um die Zeiten T abzumessen, wird ein Oszillator 25 von 20 MHz mit nachgeschaltetem Frequenzteiler 26 benutzt, womit Zählertakte von 20, 10, 5 oder 2,5 MHz für einen Zähler mit Zwischenspeicher 27 erzeugt werden können, je nachdem, welcher der Schalter S1 bis S4 geschlossen ist. Wenn die Steuerlogikschaltung 24 mit dem Startsignal den Zähler 27 entsperrt, laufen die Taktimpulse so lange ein, bis das Stoppsignal den Zähler wieder sperrt. Da die Taktfrequenz des Oszillators 25 wesentlich höher ist als die maximale Impulsfrequenz der Weggeberspuren 21 oder 22, ist der Quantisierungsfehler bei der Ausmessung der Zeiten T relativ klein, d. h. die Zeiten T werden sehr genau durch Anzahl von Oszillatortaktimpulsen ausgemessen. Demgemäß hat der Zähler 27 einen Umfang von 15 Bitplätzen. In den Pausen zwischen den Zeiten T wird zunächst das Latch-Signal ausgesendet, welches die Übernahme des Zählerstandes auf den Zwischenspeicher bewirkt, und dann das Reset-Signal, welches den Zähler wieder auf Null zurückstellt und für eine neue Zählung vorbereitet.

Der Umkehrwert der Fahrzeit T für ein Inkrement bedeutet physikalisch einen Proportionalwert zur jeweiligen Augenblicksgeschwindigkeit an der betreffenden Wegstrecke. Es ist deshalb eine Umkehrfunktionsschaltung 28 vorgesehen, der ein Digital-Analogwandler 29 nachgeschaltet ist (Fig. 2) oder die einen Digital-Analogwandler 30 beinhaltet (Fig. 3) und welche den Kehrwert 1/x zum jeweiligen Zählerstand des Zwischenspeichers 27 bildet. Dem so erhaltenen digitalen geschwindigkeitsproportionalen Zahlenwert muß noch das richtige Vorzeichen hinzugefügt werden, was durch das Sign-Signal erfolgt, welches im Fall der Fig. 2 der Schaltung 28 und im Fall der Fig. 3 dem positiven Eingang eines Operationsverstärkers 33 zugeführt wird. Es wird so ein Geschwindigkeitssignal ẋ erhalten, welches noch durch ein Tiefpaßfilter 34 zweiter Ordnung geglättet werden kann, um dem Vergleicher 11 (Fig. 1) des CNC-Interface-Reglers 20 zugeführt zu werden.

Im Falle der Fig. 2 ist die Umkehrfunktionsschaltung 28 als EPROM-Schaltung ausgebildet, die sowohl Speicherplätze zur Aufnahme des jeweiligen Zählerstandes des Zwischenspeichers 27 als auch Speicherplätze für das Sign-Signal aufweist und über einen programmierten Code die vorzeichenbehaftete 1/x-Funktion durchführt.

Im Falle der Fig. 3 wird die 1/x-Umkehr mittels eines multiplizierenden D/A-Wandlers 30 durchgeführt, der in die Rückkopplungsschleife zum negativen Eingang eines OP-Verstärkers 31 geschaltet ist, woraus eine Division mit dem durch den Vorwiderstand 32 eingegebenen Wert erfolgt, der am positiven Eingang des OP-Verstärkers 31 anliegt.

Aus dem Geschwindigkeitssignal ẋ kann durch Differentiation nach der Zeit das zugehörige Beschleunigungssignal 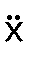 gewonnen werden. Zu diesem Zweck ist ein weiteres Tiefpaßglättungsfilter 35 und ein Differenzierer 36 vorgesehen, dessen Ausgang mit dem Regler 13 (Fig. 1) verbunden ist.

## Patentansprüche

1. Elektrohydraulisches Antriebssystem mit folgenden Merkmalen:
das System umfaßt
ein Steuerventil (1),
einen hydraulischen Betätiger (2), der von dem Steuerventil gesteuert wird und eine Last antreibt, einen inkrementaler Impulsgeber (3), der entsprechend zurückgelegten, inkrementalen Wegstrecken des Betätigers Impulse abgibt,
einen Wegzähler (4), der die Impulse zählt und daraus ein Signal für die zurückgelegte Wegstrecke oder die Ist-Position bildet,
einen ersten Vergleicher (5), der das Ist-Positionssignal mit einem Soll-Positionssignal (W) vergleicht,
eine Geschwindigkeitshilfsregelschaltung (8 bis 11 und 23 bis 33) mit einem zweiten Vergleicher (8), die das erste Stellgrößensignal aufgrund eines Geschwindigkeitssignals (ẋ) korrigiert und ein zweites Stellgrößensignal bildet,
eine Beschleunigungshilfsregelschaltung (12, 13 und 35, 36)
mit einem dritten Vergleicher (12), der das zweite Stellgrößensignal aufgrund eines Beschleunigungssignals ( 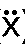 ) korrigiert und ein drittes Stellgrößensignal bildet, und
einen Ventilverstärker (15), der aufgrund des dritten Stellgrößensignals einen Steuerstrom bildet, der dem Steuerventil (1) zugeführt wird;
der inkrementale Impulsgeber (3) ist zur Abgabe zweier gegeneinander versetzter Impulsreihen ausgebildet;
die Geschwindigkeitshilfsregelschaltung (8 bis 11 und 23 bis 33) und die Beschleunigungshilfsregelschaltung (12, 13 und 35, 36) weisen eingangsseitig eine gemeinsame Meßwertberechnungsschaltung (14) auf;
die Meßwertberechnungsschaltung (14) ist an den inkrementalen Impulsgeber (3) angeschlossen und enthält
a) eine Steuerlogikschaltung (24), die aufgrund der beiden versetzten Impulsreihen (Weggeberspuren 21, 22) je eine Fahrzeit (T1 bis T10) für eine inkrementale Wegstrecke absteckt und ein Vorzeichen für die Bewegungsrichtung bildet;
b) einen Oszillator (25) mit einer wesentlich höheren Taktfrequenz, als es den versetzten Impulsreihen (21, 22) entspricht,
c) einem Zähler (27) mit Zwischenspeicher, wobei die Länge der jeweiligen Fahrzeit durch die Anzahl der Taktimpulse des Oszillators (25) gemessen wird, die während der jeweiligen Fahrzeit in den Zähler (27) mit Zwischenspeicher eingelassen werden;
d) eine Umkehrfunktionsschaltung (28; 31, 32), die den Kehrwert (1/x) zum jeweiligen Zählerstand bildet, um einen digitalen, geschwindigkeitsproportionalen Zahlenwert zu erhalten, dem noch das richtige Vorzeichen von der Steuerlogikschaltung (24) hinzugefügt wird;
e) einen Digital-Analogwandler (29, 30), der den geschwindigkeitsproportionalen Zahlenwert in das Geschwindigkeitssignal (ẋ) umwandelt;
f) einen Differenzierer (36), der aus dem geschwindigkeitsproportionalen Zahlenwert oder dem Geschwindigkeitssignal durch Differentiation nach der Zeit einen beschleunigungsproportionalen Zahlenwert bzw. das Beschleunigungssignal ( 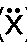 ) gewinnt.

2. Elektrohydraulisches Antriebssystem nach Anspruch 1,
dadurch gekennzeichnet,
daß die Steuerlogikschaltung (24) folgende Signale bildet:
ein Start-Signal zum Schließen und ein Stopp-Signal zum Öffnen der Verbindung zwischen dem Oszillator (25) und dem Zähler (27) mit Zwischenspeicher, wobei Flanken auf der einen Weggeberspur (21) jeweils zum Start und Flanken auf der anderen Weggeberspur (22) jeweils zum Stopp ausgenutzt werden;
ein Latch-Signal zur Übernahme des jeweiligen Zählerstandes des Zählers (27) in den Zwischenspeicher, wobei das Latch-Signal nach dem Stopp-Signal ausgesendet wird;
ein Reset-Signal zum Rücksetzen des Zählers (27) auf Null, wobei das Reset-Signal nach dem Latch-Signal ausgesendet wird; und
ein Sign-Signal zur Kennzeichnung der Bewegungsrichtung des hydraulischen Betätigers (2), wobei gleiche bzw. ungleiche Impulssprungrichtungen zwischen der ersten und zweiten Weggeberspur (21, 22) zum Erkennen der einen oder anderen Bewegungsrichtung ausgenutzt werden.

3. Elektrohydraulisches Antriebssystem nach Anspruch 2,
dadurch gekennzeichnet,
daß der jeweilige Zählerstand des Zwischenspeichers (27), durch das Sign-Signal erweitert, der Umkehrfunktionsschaltung (28) zugeführt wird, die als EPROM-Schaltung ausgebildet ist und über einen programmierten Code eine vorzeichenbehaftete 1/x-Funktion durchführt.

4. Elektrohydraulisches Antriebssystem nach Anspruch 2, dadurch gekennzeichnet,
daß der jeweilige Zählerstand des Zwischenspeichers (27) einem multiplizierenden D/A-Wandler (30) zugeführt wird, der in eine Rückkopplungsschleife zum negativen Eingang eines OP-Verstärkers (31) geschaltet ist, dessen positiver Eingang mit einem Einstellwiderstand (32) bestückt ist.

5. Elektrohydraulisches Antriebssystem nach einem der Ansprüche 1 bis 4,
dadurch gekennzeichnet,
daß die Taktfrequenz des Oszillators (25) in einem solchen Bereich liegt, daß der Zähler (27) mit Zwischenspeicher im Hinblick auf vorkommende Fahrgeschwindigkeiten bis zu 15 Bit-Plätze gefüllt wird.

6. Elektrohydraulisches Antriebssystem nach Anspruch 5,
dadurch gekennzeichnet,
daß der Oszillator (25) einen Frequenzteiler (26) aufweist, um die am Zähler (27) anliegende Taktfrequenz den vorkommenden Fahrgeschwindigkeiten im Hinblick auf 15 Bit-Plätze anzupassen.

7. Elektrohydraulisches Antriebssystem nach einem der Ansprüche 1 bis 6,
dadurch gekennzeichnet,
daß die Eingangsschaltung der Meßwertberechnungsschaltung (14) eine Impulsformerstufe (23) umfaßt, welche die versetzten Impulse des inkrementalen Impulsgebers (3) als erste und zweite Weggeberspur (21, 22) aufbereitet und an den erwünschten Pegel der Meßwertberechnungsschaltung (14) anpaßt.

8. Elektrohydraulisches Antriebssystem nach einem der Ansprüche 1 bis 7,
dadurch gekennzeichnet,
daß der Differenzierer (36) von analoger Bauart ist und diesem wenigstens ein Tiefpaßfilter (35) vorgeschaltet ist.

9. Elektrohydraulisches Antriebssystem nach einem der Ansprüche 1 bis 8,
dadurch gekennzeichnet,
daß die Geschwindigkeitshilfsregelschaltung (8 bis 11 und 23 bis 33) einen vierten Vergleicher (11) aufweist, dem das Geschwindigkeitssignal (x) und ein vom ersten Stellgrößensignal abgeleitetes Signal zugeführt werden und der ein Geschwindigkeitszwischensignal bildet, das einem Regler (9) mit P-Verstärkung und I-Nachstellzeit zur weiteren Beeinflussung zugeführt wird, bevor es zum zweiten Vergleicher (8) gelangt.

10. Elektrohydraulisches Antriebssystem nach einem der Ansprüche 1 bis 9,
dadurch gekennzeichnet,
daß die Beschleunigungshilfsregelschaltung (12, 13 und 35, 36) einen Regler (13) mit Einstellbarkeit der Beschleunigungsaufschaltung enthält, dem das Beschleunigungssignal zur weiteren Beeinflussung zugeführt wird, bevor es zum dritten Vergleicher (12) gelangt.

## Claims

1. Electrohydraulic drive system having the following features:
the system comprises
a control valve (1),
a hydraulic actuator (2) which is controlled by the control valve and drives a load,
an incremental pulse generator (3) which transmits pulses in accordance with incremental distances covered by the actuator,
a distance counter (4) which counts the pulses and forms therefrom a signal for the distance covered or for the actual position,
a first comparator (5), which compares the actual position signal with a desired position signal (W), an auxiliary speed control circuit (8 to 11 and 23 to 33) having a second comparator (8), which corrects the first manipulated-variable signal on the basis of a speed signal (ẋ) and forms a second manipulated variable signal,
an auxiliary acceleration control circuit (12, 13 and 35, 36) having a third comparator (12), which corrects the second manipulated-variable signal on the basis of an acceleration signal ( 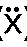 ) and forms a third manipulated variable signal, and
a valve amplifier (15) which, on the basis of the third manipulated-variable signal, forms a control current which is fed to the control valve (1):
the incremental pulse generator (3) is constructed to transmit two mutually offset pulse sequences;
the auxiliary speed control circuit (8 to 11 and 23 to 33) and the auxiliary acceleration control circuit (12, 13 and 35, 36) have on the input side a common measured-value computing circuit (14);
the measured value computing circuit (14) is connected to the incremental pulse generator (3) and contains
a) a control logic circuit (24), which on the basis of the two offset pulse sequences (displacement sensor tracks 21, 22) defines one travel time (T1 to T10) each for an incremental distance, and forms the sign for the direction of motion;
b) an oscillator (25) having a substantially higher clock frequency than corresponds to the offset pulse sequences (21, 22),
c) a counter (27) having an intermediate memory, the length of the respective travel time being measured by the number of the clock pulses of the oscillator (25) which are admitted during the respective travel time into the counter (27) having an intermediate memory;
d) an inverse function circuit (28; 31, 32), which forms the reciprocal (1/x) of the respective counter reading, in order to obtain a digital, speed-proportional numerical value to which is further added the correct sign from the control logic circuit (24);
e) a digital-to-analog convertor (29, 30), which converts the speed-proportional numerical value into the speed signal (ẋ); and
f) a differentiator (36), which by differentiation with respect to time obtains from the speed-proportional numerical value or the speed signal an acceleration-proportional numerical value or the acceleration signal ( 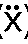 ).

2. Electrohydraulic drive system according to Claim 1, characterized in that the control logic circuit (24) forms the following signals:
a start signal for closing and a stop signal for opening the connection between the oscillator (25) and the counter (27) having an intermediate memory, edges on the one displacement sensor track (21) be respectively utilized for starting and edges on the other displacement sensor track (22) being respectively utilized for stopping;
a latch signal for accepting the respective counter reading of the counter (27) into the intermediate memory, the latch signal being transmitted after the stop signal; a reset signal for resetting the counter (27) to zero, the reset signal being transmitted after the latch signal; and
a sign signal for marking the direction of motion of the hydraulic actuator (2), identical or non-identical directions of pulse steps between the first and second displacement sensor track (21, 22) being utilized to detect the one or other direction of motion.

3. Electrohydraulic drive system according to Claim 2, characterized in that the respective counter reading of the intermediate memory (27), expanded by the sign signal, is fed to the inverter function circuit (28), which is constructed as an EPROM circuit and carries out a 1/x function with a sign via a programmed code.

4. Electrohydraulic drive system according to Claim 2, characterized in that the respective counter reading of the intermediate memory (27) is fed to a multiplying D/A convertor (30) which is switched into a feedback loop to the negative input of an OP amplifier (31) whose positive input is fitted with a variable resistor (32).

5. Electrohydraulic drive system according to one of Claims 1 to 4, characterized in that the clock frequency of the oscillator (25) is situated in such a range that the counter (27) having an intermediate memory is filled up to 15 bit places with regard to speeds occurring.

6. Electrohydraulic drive system according to Claim 5, characterized in that the oscillator (25) has a frequency divider (26) for the purpose of matching the clock frequency present at the counter (27) to the speeds occurring with regard to 15 bit places.

7. Electrohydraulic drive system according to one of Claims 1 to 6, characterized in that the input circuit of the measured-value computing circuit (14) comprises a pulse shaper stage (23) which conditions the offset pulses of the incremental pulse generator (3) as first and second displacement sensor track (21, 22) and matches them to the desired level of the measured-value computing circuit (14).

8. Electrohydraulic drive system according to one of Claims 1 to 7, characterized in that the differentiator (36) is of analog design and at least one low-pass filter (35) is connected upstream thereof.

9. Electrohydraulic drive system according to one of Claims 1 to 8, characterized in that the auxiliary speed control circuit (8 to 11 and 23 to 33) has a fourth comparator (11), to which the speed signal (x) and a signal derived from the first manipulated-variable signal are fed, and which forms an intermediate speed signal which for the purpose of being further influenced is fed to a controller (9) having a P gain and I reset time, before it reaches the second comparator (8).

10. Electrohydraulic drive system according to one of Claims 1 to 9, characterized in that the auxiliary acceleration control circuit (12, 13 and 35, 36) contains a controller (13) having adjustability of the acceleration control signal and to which the acceleration signal is fed for the purpose of being further influenced before it reaches the third comparator (12).

## Revendications

1. Système d'entraînement électrohydraulique présentant les particularités suivantes: le système comprend
une vanne de commande (1),
un actionneur hydraulique (2) qui est commandé par la vanne de commande et qui entraîne une charge,
un générateur incrémental (3) d'impulsions qui engendre des impulsions en fonction des distances incrémentales parcourues de l'actionneur,
un compteur de distance (4) qui compte les impulsions et qui produit à partir de là un signal concernant la distance parcourue ou la position réelle,
un premier comparateur (5) qui compare le signal de position réelle à un signal de position de consigne (W),
un circuit auxiliaire de réglage de vitesse (8 à 11 et 23 à 33), comprenant un deuxième comparateur (8) qui corrige le premier signal de sortie réponse sur la base d'un signal de vitesse (ẋ) et qui produit un deuxième signal de sortie réponse,
un circuit auxiliaire de réglage d'accélération (12, 13 et 35, 36),
comprenant un troisième comparateur (12) qui corrige le deuxième signal de sortie réponse sur la base d'un signal d'accélération ( 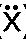 ) et qui produit un troisième signal de sortie réponse et,
un amplificateur (15) de vanne qui engendre, sur la base du troisième signal de sortie réponse, un courant de commande qui est amené à la vanne de commande (1);
le générateur incrémental d'impulsions (3) est réalisé de manière à engendrer deux séries d'impulsions décalées l'une par rapport à l'autre;
le circuit auxiliaire de réglage de vitesse (8 à 11 et 23 à 33) et le circuit auxiliaire de réglage d'accélération (12, 13 et 35, 36) présentent sur le côté d'entrée un circuit commun (14) de calcul de valeurs mesurées;
le circuit (14) de calcul de valeurs mesurées est raccordé au générateur incrémental d'impulsions et comprend
a) un circuit logique de commande (24) qui détermine, sur la base des deux séries décalées d'impulsions (traces 21, 22) de capteurs d'impulsions, un temps de parcours (T1 à T10) pour une distance incrémentale pour chacune d'elles et qui produit un signe pour le sens du placement;
b) un oscillateur (25) à fréquence de cycles sensiblement plus élevé que ce qui correspond aux séries d'impulsions décalées (21, 22),
c) un compteur (27) à registre-tampon, la longueur du temps de parcours respectif étant mesurée par le nombre des impulsions de cycles de l'oscillateur (25) qui sont entrées, pendant le temps respectif de parcours, dans le compteur (27) à tampon-registre;
d) un circuit à fonction d'inversion (28, 31, 32), qui forme la valeur inverse (1/x) de l'état respectif du compteur pour obtenir une valeur numérique, proportionnelle à la vitesse, à laquelle le signe correct est ajouté par le circuit de logique de commande (24);
e) un convertisseur numérique à analogique (29, 30) qui convertit en signal de vitesse (ẋ) la valeur numérique proportionnelle à la vitesse;
f) un différenciateur (36) qui produit, par différenciation par rapport au temps, une valeur proportionnelie à l'accélération, ou le signal d'accélération ( 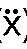 ), à partir de la valeur numérique proportionnelle à la vitesse ou du signal de vitesse .

2. Dispositif de commande électrohydraulique selon la revendication 1,
caractérisé en ce que,
le circuit de logique de commande (24) produit les signaux suivants:
un signal de début pour fermer une liaison entre l'oscillateur (25) et le compteur (27) à registre-tampon et un signal d'arrêt pour ouvrir cette liaison, des flancs étant respectivement utilisés sur une première trace (21) de capteur de distance pour le début, et des flancs étant respectivement utilisés sur l'autre trace (22) de capteur de distance pour donner l'arrêt;
un signal d'entrée en sas pour entrer dans le registre-tampon l'état respectif du compteur du compteur (27), le signal d'entrée en sas étant émis après le signal d'arrêt;
un signal de restauration pour restaurer le compteur (27) à zéro, le signal de restauration étant émis après le signal d'entrée en sas, et
un signal de signe pour indiquer le sens de mouvement de l'actionneur hydraulique (2), des sens identiques ou différents de sources d'impulsions entre la première et la deuxième trace de générateur (21) de capteur de tracé de distance étant utilisés pour déterminer l'un ou l'autre des sens de mouvement.

3. Système d'entraînement électrohydraulique selon la revendication 2,
caractérisé en ce que,
l'état respectif de compteur du tampon-registre (27), auquel a été ajouté le signal de signe, est amené au circuit (28) à fonction d'inversion qui est réalisé sous forme d'un circuit à mémoire morte programmable électriquement et réalise, au moyen d'un code programmé, une fonction 1/x signée.

4. Système d'entraînement électrohydraulique selon la revendication 2,
caractérisé en ce que,
l'état respectif du compteur du registre-tampon (27) est amené à un convertisseur N/A multiplicateur (30) qui est raccordé dans une boucle de rétroaction à l'entrée négative d'un amplificateur opérationnel (31) dont l'entrée positive comprend une résistance de réglage (32).

5. Système d'entraînement électrohydraulique selon l'une des revendications 1 à 4,
caractérisé en ce que
la fréquence des cycles de l'oscillateur (25) est située dans un domaine tel que le compteur (27) à registre-tampon est rempli jusqu'à 15 emplacements de bits, en ce qui concerne les vitesses de déplacement qui apparaissent.

6. Système d'entraînement électrohydraulique selon la revendication 5,
caractérisé en ce que
l'oscillateur (25) comprend un diviseur de fréquence (26) pour adapter, compte tenu des 15 emplacements de bits, la fréquence de cycles existant au compteur (27) aux vitesses qui apparaissent.

7. Système d'entraînement électrohydraulique selon l'une des revendications 1 à 6,
caractérisé en ce que
le circuit d'entrée du circuit (14) de calcul de valeurs mesurées comprend un étage (23) de formation d'impulsions qui prépare les impulsions décalées du générateur incrémental (3) d'impulsions sous forme d'une première et d'une deuxième traces (21, 22) de capteur de distance et qui adapte au niveau souhaité le circuit (14) de calcul de valeurs mesurées.

8. Système d'entraînement électrohydraulique selon l'une des revendications 1 à 7
caractérisé en ce que
le différenciateur (36) est du type analogique, et au moins un filtre passe-bas (35) est monté en amont de celui-ci.

9. Système d'entraînement électrohydraulique selon l'une des revendications 1 à 8
caractérisé en ce que
le circuit de réglage auxiliaire de vitesse (8 à 11 et 23 à 33) comprend un quatrième comparateur (11) auquel sont amenés le signal de vitesse (x) et un signal dérivé du premier signal de sortie réponse et qui produit un signal intermédiaire de vitesse qui est amené à un régulateur (9) à amplification P et à temps de retard I pour y être soumis à une poursuite du traitement avant de parvenir au deuxième comparateur (8).

10. Système d'entraînement électrohydraulique selon l'une des revendications 1 à 9
caractérisé en ce que
le circuit de réglage auxiliaire d'accélération (12, 13, et 31, 36) contient un régulateur (13) susceptible de régler l'influence de l'accélération auquel est amené le signal d'accélération en vue d'une poursuite du traitement avant qu'il ne parvienne au troisième comparateur (12).
